(19) Europäisches Patentamt
European Patent Office
Office européen des brevets

(11) **EP 2 250 523 B1**

(12) **EUROPEAN PATENT SPECIFICATION**

(45) Date of publication and mention
of the grant of the patent:
**13.08.2014 Bulletin 2014/33**

(51) Int Cl.:
***G02B 6/12*** *(2006.01)*

(21) Application number: **09715368.8**

(86) International application number:
**PCT/US2009/035253**

(22) Date of filing: **26.02.2009**

(87) International publication number:
**WO 2009/108757 (03.09.2009 Gazette 2009/36)**

(54) **IMPROVED WAVEGUIDE GRATING OPTICAL ROUTER SUITABLE FOR CWDM**

FÜR CWDM GEEIGNETER VERBESSERTER OPTISCHER ROUTER MIT WELLENLEITERGITTER

ROUTEUR OPTIQUE DE RÉSEAU DE GUIDE D'ONDES AMÉLIORÉ, APPROPRIÉ POUR UN MULTIPLEXAGE PAR RÉPARTITION EN LONGUEUR D'ONDE (CWDM)

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **28.02.2008 US 67395 P**
**07.05.2008 US 151469**

(43) Date of publication of application:
**17.11.2010 Bulletin 2010/46**

(73) Proprietor: **Cisparie Group Limited Liability Company**
**Dover, DE 19904 (US)**

(72) Inventor: **DRAGONE, Corrado, P.**
**Little Silver**
**NJ 07739 (US)**

(74) Representative: **Ablett, Graham Keith et al**
**Ablett & Stebbing**
**7-8 Market Place**
**London, W1W 8AG (GB)**

(56) References cited:
**EP-A- 0 921 423     WO-A-2004/083922**
**GB-A- 2 384 320**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

CROSS REFERENCE TO RELATED APPLICATIONS

The present application claims priority to U.S. Patent Application Serial No. 12/151,469, entitled "IMPROVED WAVEGUIDE GRATING OPTICAL ROUTER SUITABLE FOR CWDM," filed May 7, 2008, which in turn claims priority under 35 U.S.C. § 119(e) to U.S. Provisional Patent Application Serial No. 61/067,395, entitled IMPROVED LOW ORDER GRATING," filed February 28, 2008. Both of these applications are assigned to the same assignee as the present application, and are incorporated herein by reference in their entireties.

TECHNICAL FIELD

This disclosure generally relates to optical devices, and more particularly but not exclusively, to Waveguide Grating Routers (WGR) with small diffraction orders suitable for Course Wavelength Division Multiplexing (CWDM), for example.

BACKGROUND INFORMATION

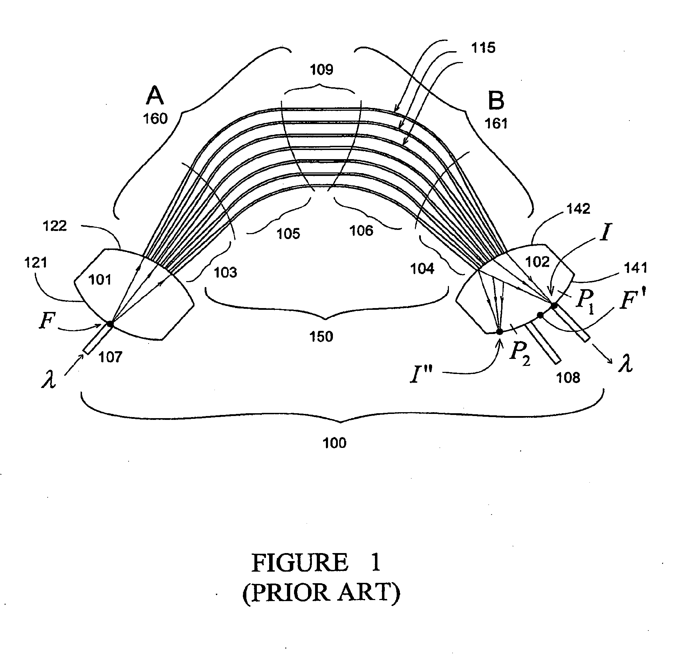

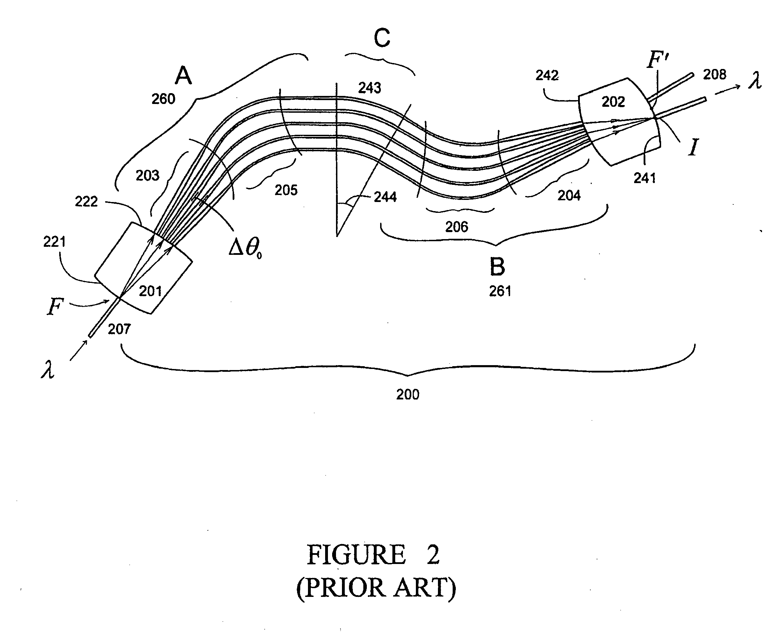

A component in current optical networks is the waveguide grating router described in U.S. Patent No. 5,136,671, issued on August 4, 1992, and entitled "IMPROVED OPTICAL SWITCH, MULTIPLEXER AND DEMULTIPLEXER." This router is currently used in optical networks to increase the long distance capacity of optical fibers by increasing the number of wavelength channels simultaneously transmitted in each fiber. Typically, in optical networks using Dense Wavelength Division Multiplexing (DWDM), the order of each router is larger than 30, and the grating can then be realized by simply using a symmetric arrangement of two identical sections A and B, equally contributing to the order of the grating as shown in Figure 1. On the other hand, in Local Access Networks using Course Wavelength Division Multiplexing (CWDM), the order can be appreciably smaller than 30, and the grating geometry is modified, as shown for instance in U.S. Patent No. 5,212,758, issued on May 18, 1993. In that patent, the grating comprises two sections A and B of opposite curvatures, and an additional section C is included between A and B as shown in Figure 2. A disadvantage of this arrangement, however, is that section C substantially increases the size of the grating, thus increasing loss and crosstalk, and reducing the maximum number of devices that can be included in each wafer.

Document WO 2004/083922 A1 discloses an apparatus comprising input coupler means, grating means and output coupler means, the grating means including an input array of radial waveguides, a first curved array of waveguides, a central array of essentially straight waveguides, a second curved array of waveguides, and an output array of radial waveguides, wherein the first and second curved arrays have opposite curvatures.

Document EP 0 921 423 A1 discloses an apparatus having the same features except for the radial waveguides.

BRIEF SUMMARY

One aspect provides a planar router of a type including an input coupler, an output coupler, and a grating having a plurality of waveguides forming arms of the grating, wherein: successive arms of the grating have a path length difference $\Delta L$ which has a substantially constant value from each arm to a next arm; the grating includes an input array of radial waveguides, a first curved array, a central array of essentially straight waveguides, a second curved array, and an output array of radial waveguides; and the first and second curved arrays are identical and with opposite curvatures and angles of rotations of the first and second curved arrays are chosen so as to produce nonzero diffraction orders.

Another aspect provides a router apparatus that includes: input coupler means for receiving an input signal; grating means for propagating components of the received input signal in respective ones of a plurality of arms, the grating means including an input array of radial waveguides, a first curved array, a central array of essentially straight waveguides, a second curved array, and an output array of radial waveguides; and output coupler means for combining the components that have propagated in the arms into an output signal, wherein the first and second curved arrays are identical and with opposite curvatures.

Still another aspect provides a method that includes: receiving an input optical signal at an input coupler; propagating components of the received input signal in respective ones of a plurality of arms of a grating, the grating including an input array of radial waveguides, a first curved array, a central array of essentially straight waveguides, a second curved array, and an output array of radial waveguides, wherein the first and second curved arrays are identical and with opposite curvatures; and combining the components that have propagated in the arms into an output signal at an output coupler.

The contents of this summary section are only provided as a simplified introduction and are not to be used to interpret or limit the scope of the claims.

## BRIEF DESCRIPTION OF THE DRAWINGS

Non-limiting and non-exhaustive embodiments are described with reference to the following figures, wherein like reference numerals refer to like parts throughout the various views unless otherwise specified.

Fig. 1 illustrates a conventional high order waveguide grating router. The grating includes two similar sections A and B equally contributing to each grating diffraction order.

Fig. 2 illustrates a conventional low order waveguide grating router derived from Figure 1 by flipping (vertically) section B and inserting between A and B an additional section C. In this arrangement, each order is entirely determined by the central section C.

Fig. 3 shows an arrangement according to one embodiment, derived from Figure 2 by removing section C and choosing different parameters (rotation angles) in sections A and B.

Fig. 4 shows details of section A of Figure 3 according to one embodiment.

Fig. 5 shows the variations with $\theta$ of the parameters $\Delta s$, $R$, $\Delta y_0$ of the curved array of Figure 4 according to one embodiment. The parameter $\Delta s$ is the initial waveguide spacing, $\Delta y_0$ is the final spacing, and R is the waveguide curvature radius.

Fig. 6 shows a layout of the curved array in Figure 4 according to one embodiment. Only some of the waveguides are shown for clarity.

Fig. 7 shows the mask layout of a 1 x 16 wavelength router with channel spacing of 1250 GHz.

Fig. 8 shows a local access network using a bidirectional arrangement of two routers designed using the arrangement of Figure 3 according to one embodiment. Also shown are the mask layouts of the two routers according to one embodiment.

Fig. 9 shows two consecutive cycles 916 and 917 realized by including in the router transitions 914 characterized by input period $\Delta\theta'_0$ equal to twice the output period.

## DETAILED DESCRIPTION

In the following description, numerous specific details are given to provide a thorough understanding of embodiments. The embodiments can be practiced without one or more of the specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

Unless the context requires otherwise, throughout the specification and claims which follow, the word "comprise" and variations thereof, such as, "comprises" and "comprising" are to be construed in an open, inclusive sense, that is as "including, but not limited to."

The headings provided herein are for convenience only and do not interpret the scope or meaning of the embodiments.

In the following description, the first digit in each element designation refers to the figure in which that element is located (e.g., 201 is located in Fig. 2). Additionally, the remaining digits are the same for similar elements occurring in different Figures.

As previously explained above, the arrangement of Figure 2 has certain disadvantages due to the addition of section C. Accordingly, in the present disclosure for one embodiment, section C is removed, and a nonzero order is realized by properly modifying sections A and B. The new arrangement is smaller and it performs better than the previous arrangement of Figure 2. Moreover, the order can be as large as 30, for example. The new arrangement can be used for certain applications, such as Course Wavelength Division Multiplexing (CWDM), requiring diffraction orders smaller than about 30, for example.

In one embodiment, an improved low order grating reduces the loss and size of a low order waveguide grating by using an asymmetric arrangement of two curved arrays. The two arrays have opposite curvatures, producing opposite rotation angles, which are properly chosen so as to produce a small diffraction order.

In one embodiment, an improved low order optical router includes an improved grating arrangement which substantially reduces the size, and improves the performance, of a previous arrangement of three curved arrays. Instead of three curved arrays, the new arrangement only includes two curved arrays of opposite curvatures, and the order can be as large as 30, for example. The complete grating of one embodiment is a waveguide array comprising: 1) an input radial array, 2) a first curved array, 3) an array of straight waveguides, 4) a second curved array of curvature opposite to the first, and 5) an output radial array. In another embodiment, the two curved arrays are each characterized by minimum curvature radius produced inside the grating aperture. In another embodiment, a bidirectional router with improved spectral efficiency is realized by including in the output radial array a special transition, whose output period is equal to half the array period.

In one embodiment, a planar optical waveguide grating arrangement comprises of a plurality of waveguides which form the arms of the grating and are essentially connected between two circular arcs whose centers respectively determine the two foci of the grating, wherein: the arms are substantially characterized by a constant length increase $\Delta L$ from each arm to the next; each arm includes two curved sections A and B having curvatures of opposite signs, so that the two sections are characterized by rotation angles of opposite signs, and the entire grating includes two parts A and B, wherein the two parts are joined together along a line substantially characterized by constant spacing $\Delta y$ between neighboring arms; each part is substantially characterized by a constant length increase, and the length increases caused by parts A and B have opposite signs, so that the order of the grating caused by the total increase $\Delta L$ is a small integer which is greater than zero and less than 20; and a nonzero order is realized by properly choosing different angles of rotation in the two parts A and B.

In one embodiment, each of the curved sections A and B comprises a central arc of constant curvature connected between two curved transitions of variable curvature, and each of parts A and B of the grating includes an arm of minimum curvature radius, wherein the arm is located in the vicinity of the center of the grating aperture.

*Router Description*

Fig. 1 shows the basic structure of a conventional imaging arrangement 100 involving a waveguide grating. Note the imaging arrangement will also be referred to herein as a router. The imaging arrangement 100 includes an input section 101 and an output section 102 spaced apart and interconnected by a grating 150, formed by a plurality of M waveguides 115 called the arms of the grating. The input and output sections, also called couplers, typically are each free-space slab waveguides, and the arrangement has the property that wave energy applied by an input waveguide 107 acting as a point source forms a plurality of output images, of which two are shown as *I*, *I″* in Fig. 1. The optical waveguide arms 115 typically are thin narrow layers (planar strips) of silica core supported on a planar silicon wafer.

In a conventional imaging arrangement or router, the input and output ports are connected to the input and output couplers 101 and 102 along portions of two circles that are typically referred to as the input 121 and output 141 circles of the router. For simplicity, Fig. 1 shows only one input 107 and two output 108 ports.

The grating is a waveguide array comprising of several sections. The first and last sections 103 and 104 are radial arrays, which are connected to the input and output couplers 101 and 102 along portions of two circles which will be referred to as the input 122 and output 142 circles of the grating. Notice the foci F and *F'* of the two radial arrays are located on the input and output circles of the router. The complete grating comprises of two parts A (160) and B (161), each including a radial array (103 or 104) and a curved array (105 or 106), and the two parts are joined together by an array 109 of parallel waveguides.

The result is a router that produces a wavelength dependent output image of each input signal. The location of each output image is determined by its wavelength $\lambda$, and therefore, signals of different wavelengths from a particular input port give rise to separate images that can be received by different output ports. Typically, optical fibers are used for applying input signals to the input ports and for extracting output signals from the output ports. In practice, many output ports may be implemented, if the router is to send signals to many different destinations. Similarly, several input ports may be implemented, in order to receive signals from different inputs. In wavelength division optical networks, the different wavelengths would represent different communication channels.

The properties of the arrangement of Figure 1 are best described next by considering its imaging properties in response to an input signal of variable wavelength $\lambda$ applied to the input waveguide 107. The input signal in Figure 1 is radiated from the waveguide location towards the receiving apertures of the arms 115 forming the grating 150. As discussed earlier, there would be an appropriate number M of arms in the grating 150. At a particular input wavelength, each arm receives a component of the input signal. The signal is therefore split into many components, each traveling along a particular arm. Each arm applies to its component an appropriate phase shift, which is wavelength dependent, and it is proportional to the optical path length of the arm. In a conventional router, successive arms are characterized to a good approximation by a constant path length difference. As a consequence, the arrangement produces on the output curve 141 a set of equally spaced images *I*, *I″* of the input signal. These images are produced at those particular locations for which the various signal components radiated by the arms add in phase, within an integer multiple of $2\pi$. The various images represent different orders (different integer multiples of $2\pi$) and they have three properties. First, their locations vary with the wavelength $\lambda$. Second, their intensities also vary, and they are determined by the radiation characteristics of the output periodic array 104. Third, the images are equally spaced with spacing $\Omega$ determined by the angular spacing $\Delta\theta$ of the array elements:

$$\Omega = \frac{\lambda}{n\Delta\theta}$$

where n is the refractive index. To be noted in a conventional router is the central image $I$ of highest intensity. This is the image closest to the focal point $F'$ of the arms and it is called the principal image. This image is produced inside the central zone, which is an interval $P_1$, $P_2$ of width $\Omega$ centered at $F'$. The remaining images (of different orders) such as $I''$ are produced outside the central zone. These images typically have appreciably smaller intensity in all cases except when they are close to the boundaries $P_1$, $P_2$ of the central zone.

In a conventional router, all the output ports or waveguides are located inside the central zone (which in Fig. 1 represents the field of view $P_1$, $P_2$ of the router) and receive the images produced in the central zone. In Fig. 1, only two output waveguide 108 are shown for simplicity, and the input signal is efficiently transmitted to a particular waveguide at those wavelengths for which the principal image location coincides with the waveguide location. As pointed out earlier, $I$ is defined as the particular image inside the central zone $P_1$, $P_2$. Therefore the variation of $I$ is a periodic (cyclic) function of the signal wavelength. In each period, the variation exactly covers the entire central zone $P_1$, $P_2$. As a result, the transmission coefficient has periodic behavior comprising of equally spaced maxima. Each maximum corresponds to a wavelength for which the image $I$ coincides with the output waveguide location. The period, given by the wavelength spacing $\lambda_f$ between maxima, is called the free-spectral range. In a conventional router, images produced outside the central zone (e.g., $I''$ of Fig. 1) are considered useless and so undesirable. Therefore, minimizing their intensities generally optimizes the router. To this purpose, one optimizes the radiation characteristics of the periodic array 104 by including in the grating suitable transitions such as shown in U.S .Patent No. 6,873,766 B2, issued on March 29, 2005, and U.S. Patent No. 7,068,888 B1, issued on June 27, 2006.

To summarize, the router response to an input signal of variable wavelength is a variable principal image whose location is a function of the signal wavelength $\lambda$. As a consequence, different wavelengths simultaneously applied to the same input waveguide can be transmitted to different output waveguides. However, the above arrangement is only suitable for large diffraction orders, typically larger than 30. For smaller orders, the above arrangement is modified, and a possible choice is the arrangement proposed previously in U.S. Patent No. 5,212,758, issued on May 18, 1993.

In a manner analogous to Figure 1, an arrangement in Figure 2 includes parts A (260) and B (261), an input section 201 and an output section 202, one input 207 and two output 208 ports, input 221 and output 241 circles, first 203 and last 204 sections, and input 222 and output 242 circles

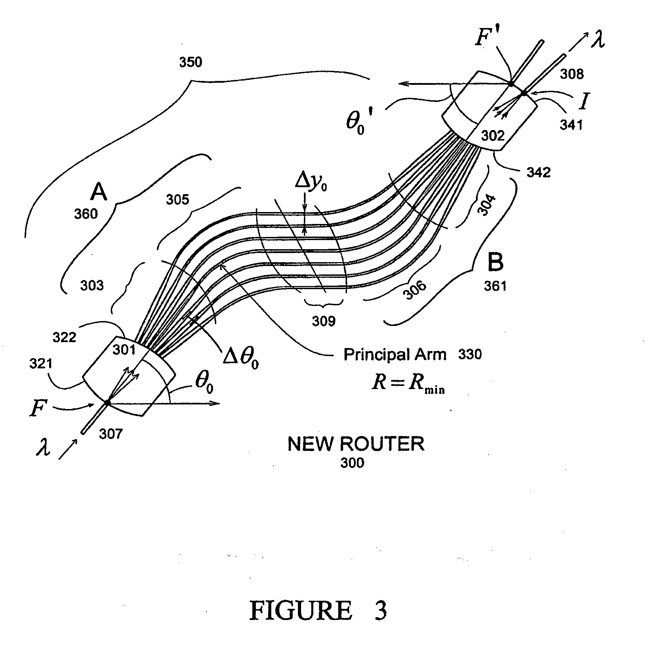

This arrangement, shown in Figure 2, includes three curved arrays 205, 243, 206, and it can be derived as follows from the arrangement of Figure 1. The grating of Figure 1 comprises of two identical parts A and B. Moreover, this grating is generally designed assuming the same curvature for all curved waveguides and, as a consequence, then the straight waveguides in the central region of the grating are not uniformly spaced (even though for simplicity they are shown equally spaced in Figure 1). On the other hand, in Figure 2, the waveguides in the central region are uniformly spaced, and the grating in this case comprises three parts A, C, B. Accordingly, the grating of Figure 2 is obtained from that of Figure 1 in three steps, namely by first choosing in Figure 1 the same waveguide spacing in the central region of the grating, by next flipping vertically the second part B, and by then including between A and B an additional array C comprising of equally spaced (curved) waveguides. One then obtains the arrangement of Figure 2, including three curved arrays 205, 243, 206. The first and last arrays 205 and 206 do not contribute to the order (of the principal image) and therefore the order is entirely produced by the intermediate array 243. A feature of this arrangement is that any order can be realized by properly choosing the angle of rotation 244 of the intermediate array 243. On the other hand, the intermediate array 243 substantially increases the size of the grating, it reduces the maximum number of devices that can be included on each wafer, and it also increases loss and crosstalk. Thus, in this present disclosure for one embodiment, both size and performance are substantially improved, as shown in Figure 3, by removing the intermediate array 243 and properly modifying the two arrays 205, 206 as shown. The new grating of Figure 3 is generally an arrangement that can be used if the order is less than about 30, for example.

In Figure 3, an arrangement 300 of a router includes parts A (360) and B (361). The arrangement 300 also includes one input 307 and two output 308 ports

The grating of Figure 3 is similar to the high order grating of Figure 1 in some ways. In both cases the grating comprises two parts A and B, each including a radial array (303 or 304) and a curved array (305 or 306) and in both cases the two parts are joined together by an array 309 of parallel waveguides. Moreover, each part is characterized in both cases by a constant path length difference from each arm to the next. On the other hand, the high order grating of Figure 1 is simpler to design, since the straight waveguides in the central region of the grating need not be uniformly spaced and, as a consequence, the same curvature can be chosen for all curved waveguides. Instead, in the other case, the straight waveguides in the central region of Figure 3 are equally spaced. As a consequence, the curved waveguides in Figure 3 have different curvatures, and the curvature variation in parts A and B are then minimized as shown and described herein.

As in Figure 1, the router in Figure 3 comprises a first coupler 301, a waveguide grating 350 of M arms of lengths $L_1, L_2 ..., L_M$, and a second coupler 302. As pointed out earlier, the grating is properly designed so that successive arms (waveguides) are characterized by a constant increase in length $\Delta L = L_2 - L_1 = L_3 - L_2$, etc. from each arm to the next. As in Figure 1, the complete grating in Figure 3 comprises a total of five arrays, namely an input radial array 303, a first curved array 305, an intermediate array 309 of parallel waveguides, a second curved array 306, and an output radial array 304. The input and output radial arrays are respectively connected to the input and output couplers 301 and 302, along the input 322 and output 342 circles of the grating. In order to maximize the grating efficiency in one embodiment, the radial waveguides are strongly coupled in the vicinity of each coupler. On the other hand, in the central section of the grating, the coupling is essentially zero in one embodiment. As in Figure 1, the waveguides of each radial array are characterized by a constant angular separation $\Delta\theta_0$, and their focal points F and F' are respectively located on the input and output circles 321 and 341 of the router.

Notice, each grating arm of one embodiment comprises several sections which are characterized in general by slightly different effective refractive indexes. Therefore, the optical path length of each section is equal to the effective refractive index of that section multiplied by the length. Accordingly, the total optical path length is the average refractive index multiplied by the total length. In the following, for simplicity, a constant refractive index will be assumed in each arm, since this will not affect the substance of the results.

Under the above conditions, consider the wavelength response to an input signal of variable wavelength $\lambda$ applied to the input waveguide. The input waveguide produces in the input coupler 301 a radial wave, and the grating performs on the incident signal three transformations. First, the incident signal is split by the first radial array 303 into M separate components, each propagating in a particular waveguide (arm) of the grating. Second, the grating applies between neighboring components a wavelength dependent phase shift:

$$\Delta\phi = 2\,\pi\,n\,\Delta L\,/\,\lambda\,, \quad (\Delta L \neq 0)$$

determined by the path length difference $\Delta L$, the wavelength $\lambda$, and the arm effective refractive index n. Third, the M components are recombined by the output radial array 304, thus producing in the output coupler 302 a radial wave, converging towards a particular output location on the output circle, thus forming at that location an output image of the input signal. The image location is determined by the phase shift $\Delta\phi$ and it is therefore a function of the signal wavelength. In particular, if $\Delta L\,/\,\lambda$ is an integer and the input waveguide is located at the focal point F, then the output image is also produced at the (output) focal point F'. As pointed out earlier, the grating also produces unwanted images, which however will be ignored here since they will be essentially eliminated by including in the grating suitable output transitions as pointed out earlier.

In general, in the design of a router of one or more embodiments, several issues are considered. First, the grating efficiency is optimized, such as shown previously in the above two patents. Second, in order to minimize radiation losses in the bends, the curvature radius R in each bend are not smaller than a minimum value $R_{min}$ determined by the refractive index contrast. Third, in the curved regions of the grating, the spacing between adjacent arms is characterized by minimal variation. Fourth, the size of the router is minimized, so as to maximize the number of devices on each wafer, thus reducing the cost of each device. Finally, loss and crosstalk are also minimized. The last two conditions are difficult to satisfy in Figure 2, which has the disadvantage of requiring three separate sections A, B and C instead of two sections A and B as in the arrangement of Figure 1. Notice, in the conventional arrangement of Figure 2, the path length difference $\Delta L$ is entirely caused by the additional curved section C. The other two sections A and B do not contribute to $\Delta L$. These two sections are identical, except for a rotation of 180°, causing their contributions to $\Delta L$ to cancel each other. Therefore an additional section C of curved waveguides is required in Figure 2 in order to produce a nonzero $\Delta L$. This section C appreciably increases the size of the grating and, as a consequence, it also increases loss and crosstalk (which is partly caused by fabrication errors, primarily in the curved sections of the arms).

Here in one embodiment, this problem is solved by removing the central section C as shown in Figure 3. Once this section is removed, the grating obtained from the conventional arrangement of Figure 2 only includes two identical sections A and B rotated with respect to each other by 180°. Therefore, since the two sections have opposite curvatures, their contributions to $\Delta L$ have opposite signs and the total path length difference $\Delta L$ becomes zero. On the other hand, by properly modifying one of the above two sections, a nonzero $\Delta L$ can be realized as shown in this present disclosure. Notice, once the central section C is removed, the two sections A an B are joined together by an array of straight waveguides, uniformly spaced by $\Delta y_0$ as indicated in Figure 3.

As pointed out earlier, the radial waveguides are strongly coupled in the vicinity of each coupler 301 or 302 in one embodiment. On the other hand, in the curved arrays 305 and 306, the coupling is essentially zero in one embodiment. These two conditions can be explained as follows. Consider for instance the radial array 303. Since this array is char-

acterized by a constant $\Delta\theta_0$, it is periodic with period $\Delta\theta_0$. As a consequence, it supports super-modes similar to the radial waves of the coupler, and in this case substantial coupling is useful in the vicinity of the coupler, since this improves the grating efficiency, provided the coupling decreases very gradually in the radial direction (with increasing distance from the coupler). On the other hand, the curved array 305 connected to the radial array is not periodic. In this case each signal component propagating in a particular arm produces negligible power transfer to other arms. Any power transfer will affect the phase shifts produced by the arms, thus causing phase aberrations resulting in higher loss and crosstalk. For instance, by assuming a refractive index contrast of 0.6% and waveguides width of about 6 $\mu m$, one finds that the waveguide spacing in each curved array is greater than about 35 $\mu m$, and therefore the spacing $\Delta y_0$ is appreciably larger than this value. For instance, in the examples considered later, $\Delta y_0 = 45$ $\mu m$. Notice the waveguides are separated in Figure 3 by strips of lower refractive index. The fabrication process will generally cause the refractive index in these strips to slightly depend on the waveguide spacing. Therefore, the waveguide spacing in each curved array are approximately characterized, for all waveguides, by the same longitudinal variation. As shown later, this condition is accurately satisfied by properly choosing the grating parameters. Finally, notice the routers considered here are quite different from the router realized previously by using the geometry of Figure 2. That router only included two output waveguides and the number of arms was about 10. On the other hand, in typical local access applications according to one embodiment, the number of output waveguides can be more than 32 for example, and the number of arms can be more than 100 for example. Then, both size and performance are optimized as described in this present disclosure.

Notice the complete grating in the embodiment of Figure 3 is composed of 5 arrays, namely an input radial array 303, a first curved array 305, a central array of straight waveguides 309, a second curved array 306, and an output radial array 304.

In the following, a prime ( )' will denote the parameters of section B. However, since the two sections A and B have similar properties, only the first section A will be considered initially.

*Example Design of a Low Order Router*

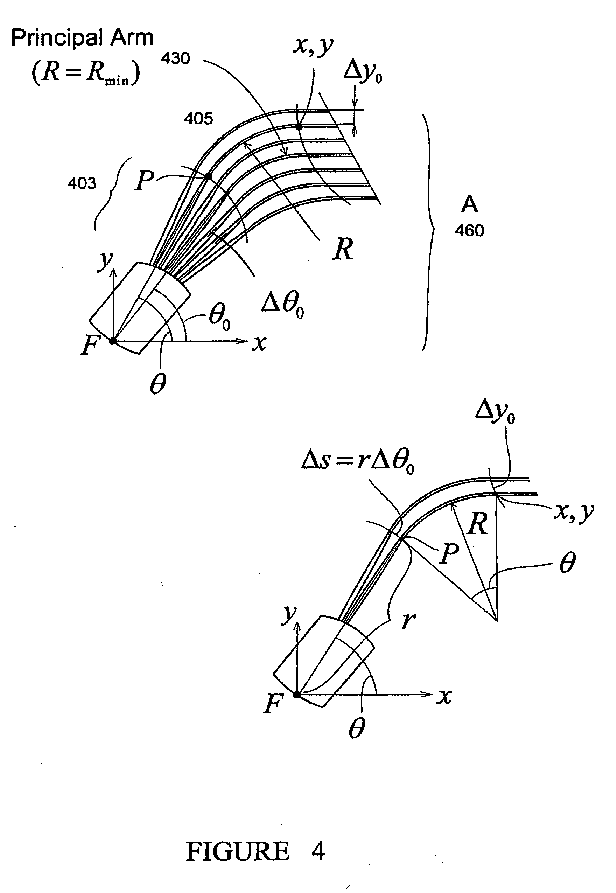

As shown in Figure 4, section A (460) comprises of three parts, namely an array 403 of radial waveguides, followed by an array 405 of curved waveguides (bends), followed by an array of (equally spaced) straight waveguides. Therefore each arm 430 in section A comprises a radial waveguide connected to a curved waveguide. In the following, $P$ will denote the connection point of these two waveguides, $\theta$ will denote the initial angle with respect to the x-direction, $r$ will denote the radial distance of $P$ from the focal point $F$, and $x, y$ will denote the coordinates at the end of the curved waveguide. Moreover, $\Delta\theta_0$ will denote the (constant) angular separation of the waveguides in the radial array, and $\Delta y_0$ will denote the (constant) separation of the straight waveguides at the end of section A. Notice the arm coordinate $\theta$ is also equal to the rotation angle produced by the curved waveguide.

In each bend, it is common practice to eliminate (or substantially reduce) the initial and final curvature discontinuities by including suitable transitions with variable curvature, and each bend then comprises of a central section of constant radius $R$ and two (relatively short) end transitions of variable curvatures. On the other hand, the two transitions will be ignored here, since this will simplify the derivation without substantially affecting the results. Thus, it will be assumed that each bend has a constant curvature radius $R$. As pointed out earlier, the value of $R$ is not smaller than a minimum value $R_{min}$ determined by the refractive index contrast. For instance, the minimum radius is approximately $R \cong 4$ mm for a refractive index contrast of 0.6%. Accordingly, the grating is designed under the constraint $R \geq R_{min}$. Note here $R$ is characterized by substantial variation as a function of the arm coordinate $\theta$. This variation of $R$ in Figure 4 is a consequence of the constant waveguide spacing $\Delta y_0$ at the end of the curved array 405, and it is generally undesirable, since it increases the size of the grating and it reduces the grating performance. Accordingly, the above variation of $R$ will be minimized as shown next.

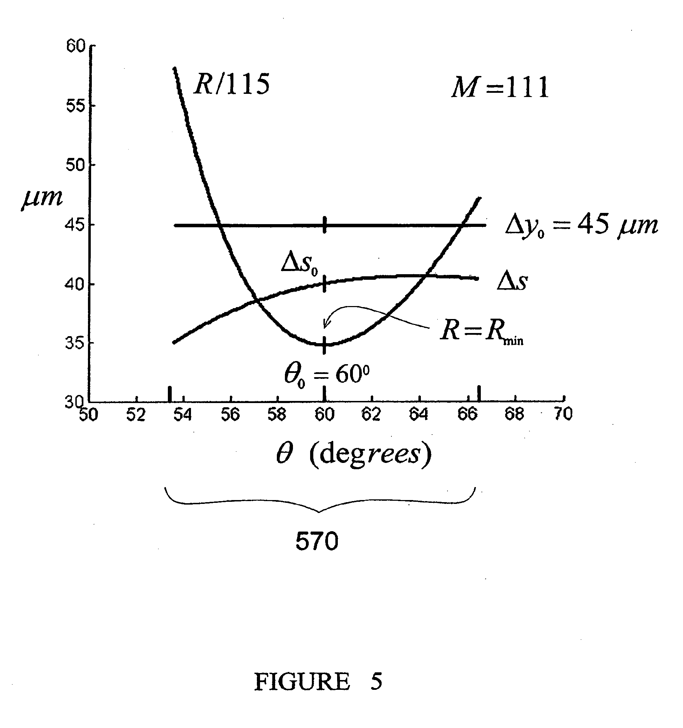

One can show that the second derivative of $R$ with respect to the angle $\theta$ is positive, for the type of arrangement considered here. Because of this property of the second derivative of $R$, it is possible to produce, inside the grating angular aperture 570 determined by the coordinate $\theta$, a central region of nearly minimum $R$ as shown in Figure 5. To this purpose, it is sufficient to design the grating so that the first derivative of $R$ vanishes for a particular arm close to the central arm, and this arm will be called the principal arm. By then choosing $R = R_{min}$ for this arm, the variation of $R$ as a function of the angle $\theta$ in the vicinity of the principal arm will be approximately stationary (the first derivative will be approximately zero as shown in Figure 5) and the value of $R$ will be close to the minimum value $R_{min}$. The following considerations apply to both sections A and B. In either case the subscript ( )$_0$ will denote the principal arm. In particular, $\Delta s_0$ will denote the principal value of the waveguide spacing $\Delta s = r\Delta\theta_0$ at the end of the radial array 403.

A property of the grating of one embodiment is that both sections A and B are uniquely determined, for a given diffraction order and given values of $\Delta\theta_0$, $\Delta y_0$, once the parameters $R, r, \theta$ are specified for the principal arm. Accordingly, the design is optimized by properly choosing the parameters of the principal arm, so as to minimize the size of the router, without causing appreciable coupling between adjacent arms in the curved regions. In each curved region, the spacing between neighboring waveguides are characterized by a well behaved variation along the entire length of each waveguide.

In particular, at the junction of each radial section with the curved section, the waveguide spacing $\Delta s = r\Delta\theta_0$ should be smaller that $\Delta y_0$. Moreover, for an optimized grating, the smallest value of $\Delta s$ will be shown to occur for the smallest $\theta$, and this minimum value of $\Delta s$ should be large enough to insure negligible mutual coupling between neighboring arms. On the other hand, the largest $\Delta s$ typically occurs in the vicinity of the top arm, and it is smaller than $\Delta y_0$. The above two conditions are satisfied straightforwardly by properly choosing $\Delta y_0$ and $\Delta s_0$. An example is illustrated in Figure 5, where the total number of arms is M = 111 and

$$\Delta y_0 = 45\ \mu m,\ \Delta s_0 = 40\ \mu m,\ \text{and}\ R_{min} = 4\ mm.$$

In this example, the angular aperture of part A of the grating covers the interval 570:

$$53.5° \leq \theta \leq 66.5°$$

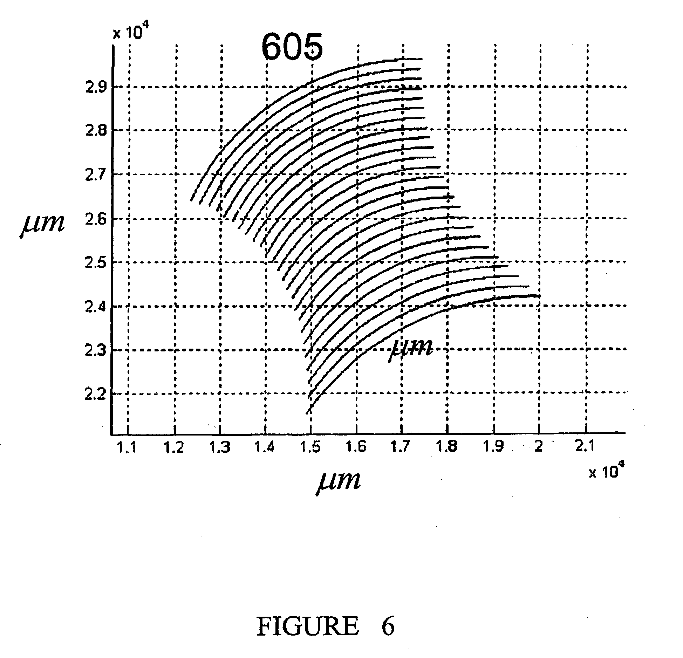

and the smallest $R$ is produced at the center $\theta_0 = 60°$ of the aperture and therefore, as pointed out earlier, the first derivative of $R$ is zero for $\theta_0 = 60°$. Notice the smallest value of $\Delta s$ is produced in the vicinity of the bottom arm, and $\Delta s$ is nearly constant for $\theta > \theta_0$. The total variation of the spacing $\Delta s$ is approximately 7 $\mu m$, and it satisfies the two conditions $\Delta s > 35\ \mu m$ and $\Delta y_0 > \Delta s$. The former condition is realized by choosing a large enough value of $\Delta s_0$ and, the latter condition, by choosing a large enough value of $\Delta y_0$. Figure 6 shows a mask layout 605 of the curved waveguides in part A. Only some of the waveguides are shown for clarity. One can see that the waveguide spacing is characterized by a well behaved variation in all cases. One can also verify that similar results are obtained for:

$$45° < \theta_0 < 75°.$$

Next, consider the path length difference $\Delta L$ between successive arms of the grating. As pointed out earlier, the design is optimized here by specifying zero derivative of $R$ at the principal arm location, so as to produce at that location $R = R_{min}$ as shown in Figure 5. Under the above conditions, one can show that section A contributes the path length difference:

$$\Delta L_0 = \tan(\theta_0 / 2)\ [\Delta y_0 + \Delta s_0], \qquad (R = R_{min}) \qquad (1)$$

Similarly, B contributes:

$$-\Delta L'_0 = -\tan(\theta'_0 / 2)\ [\Delta y_0 + \Delta s'_0], \qquad (R' = R_{min}) \qquad (2)$$

which is now negative because B in Figure 3 is rotated by 180° with respect to A. The total path length difference $\Delta L$ is the sum of the above two contributions:

$$\Delta L = \Delta L_0 - \Delta L'_0,$$

giving:

$$\Delta L = [\tan(\theta_0 / 2) - \tan(\theta'_0 / 2)] \Delta y_0 + [\tan(\theta_0 / 2) \Delta s_0 - \tan(\theta'_0 / 2) \Delta s'_0] \qquad (3)$$

In particular, by choosing $\Delta s'_0 = \Delta s_0$:

$$\Delta L = [\tan(\theta_0 / 2) - \tan(\theta'_0 / 2)](\Delta y_0 + \Delta s_0) \qquad (4)$$

and one can verify that the order $n\Delta L / \lambda$ can be larger than 30 if one assumes:

$$45° < \theta'_0 < \theta_0 < 75°, \; \Delta y_0 + \Delta s_0 \cong 85 \; \mu m, \qquad (5)$$

and a center wavelength $\lambda = 1.442 \; \mu m$.

Notice the above design can be modified in many ways without affecting the substance of the results. The above expressions were derived assuming in each bend a constant curvature, but similar results are obtained without this restriction. Moreover, the above expressions are not affected if different principal arms are chosen in parts A and B, in which case the principal coordinates $\theta_0$ and $\theta'_0$, correspond to different grating arms.

The parameters $\Delta\theta_0$, $\Delta\theta'_0$ do not appear explicitly in the above expressions. However, they play a role in the router design, since they determine the input and output apertures $M \Delta\theta_0$, $M \Delta\theta'_0$ of the grating, they affect the size and performance of the grating, and they also determine the router magnification, which is equal to the ratio $\Delta\theta_0 / \Delta\theta'_0$. The values of $1/\Delta\theta_0$ and $1/\Delta\theta_0$ respectively determine the spacing (and the width) of the input and output waveguides. An example application, described later, is the design of a 1 x $N$ router whose output efficiency is optimized by including suitable transitions based on the two patents identified earlier. In this case, a small period $\Delta\theta'_0$ may be desirable in section B, and it may then be advantageous to minimize the size of the grating by choosing $\Delta\theta_0 > \Delta\theta'_0$.

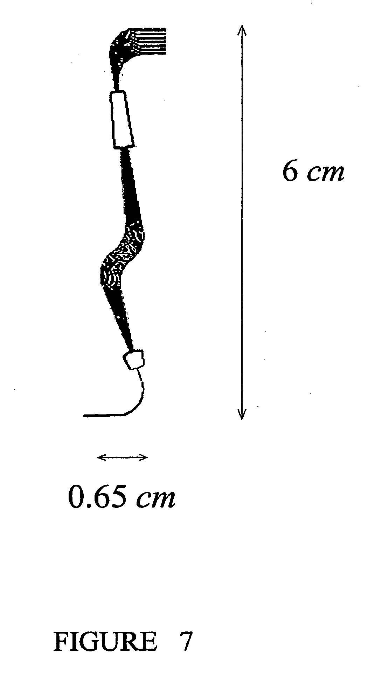

Figure 7 shows for instance the layout of a 1 x 16 router characterized by channel spacing of 1250 GHz, suitable for Local Access applications. In this case the grating is characterized by:

$$\Delta L = 7.95 \; \mu m, \text{ and } \theta_0 = 62° \qquad (6)$$

and it was optimized by assuming a refractive index contrast of 0.6% and choosing:

$$\theta_0 - \theta'_0 = 8.1°, \; \Delta y_0 = 45 \; \mu m, \; r_0\Delta\theta_0 = r'_0\Delta\theta'_0 = 40 \; \mu m \qquad (7)$$

Suitable transitions were included in the bends, and therefore the above value $\Delta L = 7.95 \; \mu m$ is slightly different from the value $7.86 \; \mu m$ obtained from expression (4) without transitions. In the above arrangement, the router efficiency was optimized by including in the grating special output transitions as shown in the above two patents. The total loss is expected to be about 3dB, which is the typical loss of commercially available routers of the simpler type shown in Figure 1.

The embodiment of the router of Figure 7 is thin and long, and more than 15 devices can fit on a 6 inches wafer for example; whereas using the arrangement of Figure 2, the number of devices would be reduced to about 10, and higher loss and crosstalk would be produced.

Next, let $s_{max}$ and $s_{min}$ denote respectively the largest and smallest waveguide separation in the central grating region comprising of the two curved arrays and the central array of straight waveguides. Then, assuming $\Delta\theta_0 \geq \Delta\theta_0$ one can verify by using the general expression (3) that the path length difference $\Delta L$ is larger than:

$$\tan(\theta_0 / 2) \bullet (s_{max} + s_{min}) - \tan(\theta'_0 / 2) \bullet 2s_{max} \qquad (8)$$

and it is smaller than:

$$\tan(\theta_0 / 2) \bullet 2s_{max} - \tan(\theta'_0 / 2) \bullet (s_{max} + s_{min}) \qquad (9)$$

As pointed out earlier, condition (3) only applies if each bend has a constant curvature, whereas the above two conditions (8) and (9) include all cases of interest, without the above restriction. The above conditions define the range of router parameters of one embodiment covered by this present disclosure.

So far, a constant $\Delta L$ was assumed, but it may be advantageous in some embodiments to modify this condition for several reasons. So far, it was assumed that the input signal produces an input radial wave emanating from the input waveguide location. In practice, the input wave may be afflicted by small aberrations, causing phase errors that can be corrected by slightly modifying the lengths of the arms. Similar aberrations may be caused by the output waveguides, as one can verify by reversing the sense of transmission. Moreover, even in the absence of aberrations, it may be advantageous in some embodiments to slightly modify the lengths of the arms, for instance in order to widen the passband. The grating is then modified accordingly.

*Example Applications*

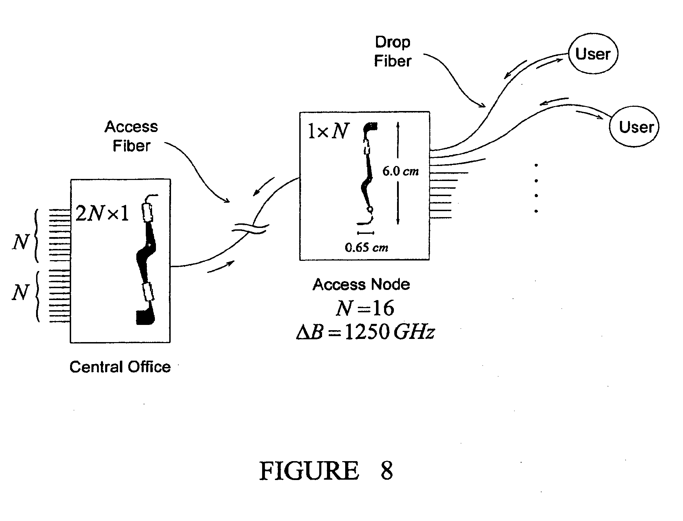

The above example embodiment(s) of the router is expected to play a role in next generation Local Access Networks, for example. In this case, the initial fiber installation is a large fraction of the initial cost and therefore the cost per user is substantially reduced by increasing the number of users served by each access fiber. Consider for instance an access fiber connected between a central office and an access node serving a particular access area. Then, by using two routers respectively located in the central office and the access node, as shown in Figure 8, the fiber installation cost per user is minimized by transmitting in the fiber many channels covering the entire available bandwidth B (about 360 nanometers) of the fiber. Moreover, by using the cyclic property of the waveguide grating router, bidirectional transmission in each fiber can be realized in a simple fashion, by using two consecutive cycles of the access router, thus further reducing the total number of fibers in the network.

However, a characteristic of the above technique is that two consecutive cycles cannot provide acceptable efficiency over the entire fiber bandwidth B. Instead, one obtains two separate transmission bands, each produced by one cycle, and the two bands are separated by a band of substantially lower efficiency. As a consequence, a conventional design will only provide efficient transmission over less than 67% of the fiber bandwidth B. Here this problem is solved by maximizing the router efficiency as shown next.

In Figure 8, a single fiber provides bidirectional transmission between the access node and the central office, and similarly a single drop fiber is used between the access node and each user. In this arrangement, simultaneous transmission in the downstream and upstream directions is realized by using different cycles of the router in the access node. Three parameters are the number N of channels transmitted in each direction, the channel spacing $\Delta B$, and the fiber available bandwidth B. As discussed later, the bidirectional router is efficient in two separate transmission bands, each having width equal to $N\Delta B$. The two bands are separated by an intermediate band of lower efficiency, and the fiber bandwidth $B$ exactly covers the three bands. A parameter in this case is the router spectral efficiency:

$$E = \frac{2N\Delta B}{B}, \qquad (10)$$

determined by the fraction, of the available bandwidth B, that is actually used by the bidirectional router.

Typically, in the above example arrangement, the order of each router is less than 10, and one would like the number of channels $N$ to be at least 16, in each direction. One would also like the channel spacing to be large enough to allow the access routers to be used outdoors without temperature control. For this reason, the product $N\Delta B$ is maximized in one embodiment for a given $B$ by maximizing the above spectral efficiency E as discussed next.

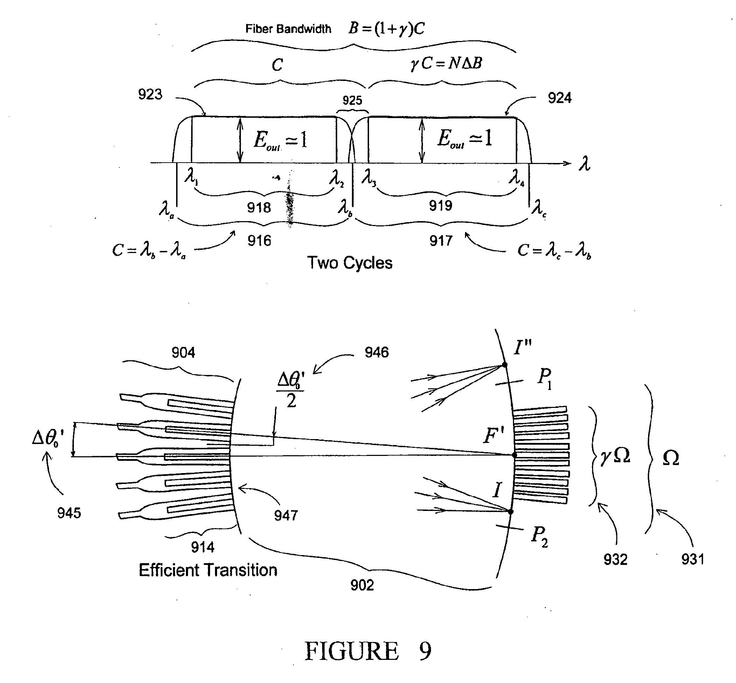

Consider in Figure 1 the router response to an input signal of increasing wavelength $\lambda$ applied to the input waveguide, and consider two consecutive cycles of orders Q and Q - 1. For simplicity, ignore the wavelength dependence of the central zone width $P_1P_2$. The first cycle of order $Q$ starts at a particular wavelength $\lambda_a$ for which the image $I$ (of order $Q$) is produced at the first edge $P_1$ of the central zone $P_1P_2$, and the cycle ends at a wavelength $\lambda_b$ for which the image (of order $Q$) is located at the other edge $P_2$. At this wavelength, a new cycle (of order $Q$ - 1) starts at $P_1$ and it ends again at $P_2$ at a higher wavelength $\lambda_c$. In each cycle, the image intensity varies considerably. Typically, the image has maximum intensity at the focal point $F'$, and it is smaller, by at least a factor of two, at the edges of the central zone $P_1P_2$. This variation is primarily caused by the efficiency variation of the output radial array 104, whose efficiency $E_{out}$ is defined as the fraction of the grating output power that is transferred to the principal image. Typically, for a conventional array, the efficiency $E_{out}$ is close to unity only in the vicinity of the focal point $F'$ and, as a consequence, the output waveguides are included in the vicinity of the focal point, inside a region that is substantially smaller than the central zone width $P_1P_2$. Outside this region, one can show that the loss is primarily caused by the first harmonic of the end discontinuity of the output radial array. Here this unwanted harmonic must be substantially reduced, such as shown previously in U.S. Patent No. 6,873,766 B2, by including in the output radial array special transitions 914 as shown in Figure 9. By including these transitions, the output period 946 at the end 947 of the array is reduced by a factor of two, as compared to the input period 945. As a consequence, the above second harmonic is eliminated at the junction discontinuity 947. These transitions 914 are characterized by nearly unity matching efficiency (923 and 924), over more than 80% of each cycle (916 and 917) as illustrated in Figure 9.

The bottom part of Figure 9 shows the output radial array 904 of the grating, the output coupler 902 and an array of output waveguides located inside the central zone $P_1P_2$ of the grating, according to one embodiment. As pointed out earlier, the output efficiency of the grating is close to unity inside an interval 932 which is smaller (by a factor $\gamma$, as indicated in Figure 9) than the width $\Omega$ of the central zone interval 931. The output waveguides are placed inside this interval 932, and the value of $\gamma$ is maximized as follows.

In Figure 9, each element of the radial array 904 includes a transition 914 comprising of two identical waveguides. As a consequence, at the array junction 947 with the coupler 902, the end period 946 is smaller by a factor two than the period 945 at the input of the transition. This eliminates the second harmonic of the junction discontinuity 947 of the radial array and, as a consequence, one can show that transitions 914 are typically characterized by $\gamma > 0.8$. That is, nearly unity matching efficiency is realized over more than 80% of the central zone 931. On the other hand, without transitions 914, one can show that typically $\gamma < 0.5$.

The top part of Figure 9 shows the output efficiency variation in two consecutive cycles of the principal image $I$. As discussed earlier, the first cycle 916 starts at $\lambda_a$, and it ends at $\lambda_b$, which is the beginning of the next cycle 917. As shown in Figure 9, the width C of each cycle is given by:

$$C = \lambda_b - \lambda_a = \lambda_c - \lambda_b$$

Also shown in Figure 9 is the output efficiency $E_{out}$ produced by transition 914. In each cycle, the efficiency variation is a replica of the corresponding variation in the central zone. Therefore, since the efficiency $E_{out}$ is nearly unity in the interval 932, the same result is obtained in the corresponding intervals 923 and 924. The router is therefore characterized by two transmission bands 923 and 924 characterized by nearly unity efficiency $E_{out}$ and each transmission band has width (918 and 919):

$$\lambda_2 - \lambda_1 = \lambda_4 - \lambda_3 = \gamma C \qquad\qquad (11)$$

Note the two bands 923 and 924 are displaced from each other by the cycle width C, and therefore:

$$\lambda_3 - \lambda_1 = C$$

Moreover, as stated earlier, the two transmission bands are separated by an interval 925 of lower efficiency. In order to maximize the spectral efficiency E of the router, the fiber bandwidth B coincides with the above three intervals, so that

$$\lambda_4 - \lambda_1 = B \tag{12}$$

Moreover, one chooses:

$$\gamma C = N\Delta B ,$$

so that the output waveguides fully cover (see bottom part of Figure 9) the central zone interval 932 of maximum efficiency. Under the above conditions, one obtains $\lambda_4 - \lambda_1 = C + \gamma C$, and from all the above relations one obtains:

$$E = \frac{(\lambda_2 - \lambda_1)(\lambda_4 - \lambda_3)}{(\lambda_4 - \lambda_1)} = \frac{2\gamma}{1+\gamma} \tag{13}$$

where the numerator is determined by the two transmission bands (11) and, the denominator, by the fiber bandwidth (12). According to the above expression, the spectral efficiency $E$ is determined in a simple way by the parameter $\gamma$, and in Figure 8, E is maximized by maximizing $y$. By using a conventional design without transitions 914, one can show that typically $\gamma < 0.5$, and the efficiency E is then less than 67%. By instead using transitions 914, the efficiency E becomes greater than 89% for $\gamma > 0.8$. As shown next, the resulting increase in channel spacing is present in Figure 8 in order for the access router to be suitable for use outdoors.

A parameter in Figure 8 is the 1-$dB$ passband width $W$ of each router. A large $W$ is useful because it allows the access router to be used outdoors, without temperature control, and also because the transmitters are then simplified, since a large $W$ reduces the tolerances on the laser wavelengths. The value of $W$ is determined by the channel spacing $\Delta B$ and it varies depending on the router design. For a Gaussian design, $W$ is approximately equal to $\Delta B / 4$ , but this value can be doubled by modifying the design (so as to produce a maximally flat response such as shown in U.S. Patent No. 5,412,744, issued on May 21, 1995) with a loss penalty of about 2.5 $dB$. In the former case, one obtains for $\gamma = 0.8$ and $B = 360$ $nm:$

$$W \cong \frac{40}{N} nm$$

From this expression for $N = 16$, one obtains $W \cong 2.5$ $nm$, large enough to allow the router to be used without temperature control. In fact, $W \cong 2.5$ $nm$ is almost twice the wavelength variation caused, over the temperature range from -40°C to +75°C, by the router temperature sensitivity of 0.012 $nm$ / °C. On the other hand, in order to obtain the same result for $N = 32$, a maximally flat response is used, with a loss penalty of 2.5 dB. Note the above large widths $W$ are obtained in Figure 8 by using the transitions 914 of Figure 9.

Notice in the embodiment of Figure 8, a 2$N$ x 1 router is used in the central office, in order to separate and combine the upstream and downstream signals, and one router cycle is used in this case. The embodiment of the router in the access node of Figure 8 is thin and long, and about 15 devices can fit on a 6 inches wafer, for example. The other router (in the central office) is larger, and therefore the number of devices is about 10, for example. The loss in either case is about 3 dB for a Gaussian design, as pointed out earlier.

*Other embodiment(s)*

In one embodiment, let $\theta_A$, $\Delta\theta_A$, $\Delta L_A$, $r_A$ denote the parameters of the principal arm of section A. Then the following relationship can be derived between the path length difference $\Delta L_A$ and the angle of rotation $\theta_A$:

$$\Delta L_A / \Delta \theta_A = \tan(\theta_A / 2) [\Delta y / \Delta \theta_A + r_A], \qquad \text{for } R = R_{min}, \quad \text{(a)}$$

One also finds that:

$$\Delta r_A / \Delta \theta_A = [\Delta y / \Delta \theta_A - r_A \cos(\theta) - R_A \sin(\theta_A)] / \sin(\theta_A), \quad \text{for } R = R\text{min} \quad \text{(b)}$$

Similar relations are obtained in section B, except that the path length difference in (a) becomes $-\Delta L_B$, because of the 180° rotation. Thus, suppose for instance that the two arrays A, *B* are characterized by same values of $\Delta \theta$, *r* in the above expressions. Then denoting by $\Delta L_A$, $\theta_A$ and $\Delta L_B$, $\theta_B$ the values of $\Delta L, \theta$ in the two cases, the optical path length difference $\Delta L$ for the complete arrangement is given by:

$$\Delta L = \Delta L_A - \Delta L_B = [\tan(\theta_A / 2) - \tan(\theta_B / 2)] (\Delta y + r\Delta \theta) \qquad \text{(c)}$$

with $r = r_A = r_B$ and $\Delta \theta = \Delta \theta_A = \Delta \theta_B$. Therefore, any specified value of $\Delta L$ can be realized by introducing a suitable difference between the two angles $\theta_A$ and $\theta_B$. Notice, as discussed later, it may be advantageous in some cases to choose slightly different values of *r*, $\Delta \theta$ in sections A and B, and the above expression (c) is then be modified accordingly. In the design, the value of $(\theta_A + \theta_B) / 2$ is properly chosen so as to optimize the grating uniformity, which is determined in each section by the variation of the waveguide spacing $r\Delta \theta$.

An example is described next herein for a layout of a 1 x 18 router (size 6 cm long by 1 *cm* wide, for instance) characterized by channel spacing of 1000 GHz, suitable for Local Access applications, for example. In this case, the grating is characterized by:

$$\Delta L = 9.6 \ \mu m, \text{ and } \theta_A - \theta_B = 10°, \qquad \text{(d)}$$

and it is optimized by assuming a refractive index contrast of 0.06% and choosing:

$$\Delta y = 45 \mu m, \ (\theta_A + \theta_B) / 2 = 60°, \ r_A \Delta \theta = r_B \Delta \theta = 40 \mu m, \ \Delta \theta = 10° \qquad \text{(e)}$$

Suitable transitions are included in the bends, and therefore the above value $\Delta L = 9.6 \ \mu m$ is slightly different from the value obtained from expression (c) without transitions. A grating can be optimized by initially assuming two identical sections with $\theta_A = \theta_B$. After this, the appropriate $\theta_A - \theta_B$ producing the specified $\Delta L$ is chosen without changing the previously optimized value of $(\theta_A + \theta_B) / 2$. The spacing $\Delta y$ and the value of $r\Delta \theta$ can be chosen as follows. As pointed out earlier, the value of $\Delta y$ is large enough to insure negligible coupling between neighboring waveguides, and a reasonable choice in the above example was $\Delta y = 45 \ \mu m$. The parameter $r\Delta \theta$, which is the waveguide spacing at the beginning P of the bend, is somewhat smaller than the spacing $\Delta y$ at the end of the bend. Accordingly, in the above example, $r\Delta \theta$ was chosen equal to 40 $\mu m$. In the above arrangement the router efficiency is optimized by including in the grating special transitions as identified above. These transitions also reduce the size of the router. In particular, the number of arms is reduced by about 60%. The total loss is expected to be about 3 *dB*, as in commercially available (high order) routers.

In the above example, the same value of $\Delta \theta$ was chosen for both sections A and B and condition $R \cong R_{min}$ was specified in both cases for the central arm. In general, however, the two sections may be characterized by different $\Delta \theta$, and different arms may be characterized by $R \cong R_{min}$.

The router of this example is thin and long, and about 15 devices can fit on a 6-inch wafer, for instance; whereas using the arrangement of Figure 1, the number of devices would be reduced to about 10, and higher loss and crosstalk would be produced.

For additional design considerations, assume for instance an odd number of waveguides, and let the central arm be characterized by minimal curvature. The following considerations apply equally to both sections A and B, and therefore only section A will be considered. Let:

$$\theta_i, \ r_i, \ R_i, \ \Delta r_i, \ \Delta R_i$$

denote the $i$ - $th$ values of $\theta$, $r$, $R$, $\Delta r$, $\Delta R$ and let:

$$\Delta r_i, = r_i - r_{i-1}, \qquad \Delta R_i = R_i - R_{i-1}.$$

The spacing at the end of the $i$ - $th$ arm is equal to $r_i \Delta\theta$, and one would like the spacing in each curved section to gradually increase from the initial value $r_i \Delta\theta$ to the final value $\Delta y$. Accordingly, one would like all arms to satisfy the condition:

$$\Delta y > r_i \Delta\theta$$

Moreover, the grating of one embodiment is characterized, at the beginning of each curved section, by essentially zero mutual coupling with its neighbors. Therefore, a sufficiently large spacing $r_i \Delta\theta$ is chosen. For instance, in one example:

$$r_i \Delta\theta > 35 \ \mu m$$

was specified. Typically, one finds that the spacing $r_i A\theta$ is smallest for the bottom arm and it is largest in the vicinity of the top arm. One therefore obtains the two conditions:

$$\Delta y \geq r_M \Delta\theta, \qquad r_1 \Delta\theta \geq 35 \ \mu m \qquad\qquad\qquad \text{(f)}$$

which can be satisfied by properly choosing $\Delta y$ and the difference $\Delta y$- $r\Delta\theta$ for the central arm. In the above example, by choosing $\Delta y = 45 \ \mu m$ and $r\Delta\theta = 40 \ \mu m$, the above two conditions are satisfied with $r_M \Delta\theta \cong 44 \ \mu m$ and $r_1 \Delta\theta \cong 36 \ \mu m$, and similar values are obtained for section B.

The grating of one embodiment is designed by the following procedure. The embodiment of the router under consideration is an imaging arrangement not necessarily characterized by unity magnification. Thus, since the input value of $\Delta\theta$ is equal to the output value divided by the magnification, the arrangement is not necessarily characterized by the same input and output values of $\Delta\theta$. Note the output value of $\Delta\theta$ determines in a simple way the separation (and therefore also the width) of the output waveguides, and similarly the input $\Delta\theta$ determines the input waveguide width. Once the values of $\Delta\theta$ are chosen the design proceeds as follows. In section A, choose $R = R_{\min}$ in a particular arm, called the principal arm. Similarly, in section B, select a principal arm, not necessarily the same as in section A. Initially, however, it is convenient to assume that the principal arm is the same for both sections, and it is simply the central arm, or an arm close to the center. As shown previously a simple relation, given approximately by the expression (c), exists in each section between the parameters $r, \theta, \ \Delta\theta, \ \Delta y$ of the principal arm and the contribution to $\Delta L$ by that section. Therefore, the appropriate angular difference $(\theta_A - \theta_A) / 2$ producing a specified value of $\Delta L = \Delta L_A - \Delta L_B$ can be determined straightforwardly. Moreover, the entire grating (the values of $r_i$, $R_i$) can then be determined straightforwardly. As pointed out earlier, the spacing $r_i \Delta\theta$ may in one embodiment vary in a well behaved manner, with maximum and minimum values satisfying conditions (f). Thus the optimum parameters are best determined in general by successive iterations.

Notice, in order for the two sections A and B to be compatible in one embodiment, at the junction line, they have a constant separation $\Delta y$ at the junction.

So far in an embodiment, a constant length difference was specified between adjacent arms. More generally, this condition may be slightly modified without substantially changing the previous design. For instance, instead of producing a constant length difference, there may be a small variation in $\Delta L$ in one embodiment, so as to improve for instance the flatness of each passband.

The above description of illustrated embodiments, including what is described in the Abstract, is not intended to be exhaustive or to be limited to the precise forms disclosed. While specific embodiments and examples are described herein for illustrative purposes, various equivalent modifications are possible and can be made.

These and other modifications can be made in light of the above detailed description. The terms used in the following claims should not be construed to limit the claims to the specific embodiments disclosed in the specification. Rather, the scope of the claims is to be determined in accordance with established doctrines of claim interpretation.

**Claims**

1. An apparatus, comprising:

    input coupler means for receiving an input signal;
    grating means for propagating components of the received input signal in respective ones of a plurality of arms, the grating means including an input array of radial waveguides, a first curved array of waveguides, a central array of essentially straight waveguides, a second curved array of waveguides, and an output array of radial waveguides; and
    output coupler means for combining the components that have propagated in the arms into an output signal, wherein the first and second curved arrays have opposite curvatures,
    wherein each waveguide of the first curved array is **characterized by** a curvature radius $R$ that varies as a function of an angle of rotation $\theta$ of the waveguide and variation of $R$ is minimized by choosing parameters of the first curved array so that a derivative of said variation of $R$ is essentially zero for a particular principal angle of rotation $\theta = \theta_0$ inside an aperture of the first curved array, so that a radius of a principal waveguide corresponding to said principal angle of rotation $\theta_0$ is a smallest curvature radius in said first curved array, and
    wherein each waveguide of the second curved array is **characterized by** a curvature radius $R'$ that varies as a function of an angle of rotation $\theta'$ of the waveguide and variation of $R'$ is minimized by choosing parameters of the second curved array so that a derivative of said variation of $R'$ is essentially zero for a particular principal angle of rotation $\theta = \theta_0$ inside an aperture of the second curved array, so that a radius of a principal waveguide corresponding to said principal angle of rotation $\theta_0$ is a smallest curvature radius in said second curved array.

2. The apparatus of claim 1 wherein said principal angles of rotations $\theta_0$ and $\theta_0$ are chosen so as to produce nonzero diffraction orders.

3. The apparatus of claim 1 wherein each of the arms of the grating means includes sections having different effective refractive indexes.

4. The apparatus of claim 1 wherein successive arms of the grating means have a path length difference $\Delta L$ which has a substantially constant value from each arm to a corresponding next arm.

5. The apparatus of claim 1 wherein the waveguides of the central array have substantially constant waveguide spacing.

6. The apparatus of claim 1 wherein the radial waveguides in the input and output arrays have constant radial separation between waveguides.

7. The apparatus of claim 1 wherein said smallest curvature radii of the first and second principal waveguides are substantially smaller than radii produced at edges of an aperture of the grating.

8. The apparatus of claim 1 wherein the apparatus comprises a router.

9. The apparatus of claim 1 wherein an angular period of the input array of radial waveguides is greater than an angular period of the output array of radial waveguides.

**10.** The apparatus as recited in claim 1 wherein:

said smallest curvature radii of the first and second principal waveguides are substantially smaller than radii produced at edges of an aperture of the grating means;

said principal angles of rotations $\theta_0$ and $\theta_0$ of the first and second principal waveguides, respectively, satisfy a condition $\theta_0 \geq \theta_0$; and

a path length difference $\Delta L$ is greater than a value of an expression:

$$\tan(\theta_0 / 2) \cdot (s_{max} + s_{min}) - \tan(\theta'_0 / 2) \cdot 2s_{max}$$

and $\Delta L$ is smaller than a value of:

$$\tan(\theta_0 / 2) \cdot 2s_{max} - \tan(\theta'_0 / 2) \cdot (s_{max} + s_{min})$$

where $s_{max}$ and $s_{min}$ are respectively largest and smallest waveguide separation in a central grating region that includes the first and second curved arrays and the central array.

**11.** A method, comprising:

receiving an input optical signal at an input coupler;

propagating components of the received input signal in respective ones of a plurality of arms of a grating, the grating including an input array of radial waveguides, a first curved array of waveguides, a central array of essentially straight waveguides, a second curved array of waveguides, and an output array of radial waveguides, wherein the first and second curved arrays have opposite curvatures,

wherein each waveguide of the first curved array is **characterized by** a curvature radius $R$ that varies as a function of an angle of rotation $\theta$ of the waveguide and variation of $R$ is minimized by choosing parameters of the first curved array so that a derivative of said variation of $R$ is essentially zero for a particular principal angle of rotation $\theta = \theta_0$ inside an aperture of the first curved array, so that a radius of a principal waveguide corresponding to said principal angle of rotation $\theta_0$ is a swe believmallest curvature radius in said first curved array, and

wherein each waveguide of the second curved array is **characterized by** a curvature radius $R'$ that varies as a function of an angle of rotation $\theta$ of the waveguide and variation of $R'$ is minimized by choosing parameters of the second curved array so that a derivative of said variation of $R'$ is essentially zero for a particular principal angle of rotation $\theta = \theta_0$ inside an aperture of the second curved array, so that a radius of a principal waveguide corresponding to said principal angle of rotation $\theta_0$ is a smallest curvature radius in said second curved array; and

combining the components that have propagated in the arms into an output signal at an output coupler.

**Patentansprüche**

**1.** Eine Vorrichtung, die Folgendes beinhaltet:

Eingangskopplermittel zum Empfangen eines Eingangssignals;

Gitter-Mittel zum Propagieren von Komponenten des empfangenen Eingangssignals in jeweiligen einer Vielzahl von Armen, wobei das Gitter-Mittel eine Eingangsanordnung von radialen Wellenleitern, eine erste gekrümmte Anordnung von Wellenleitern, eine zentrale Anordnung von grundsätzlich geraden Wellenleitern, eine zweite gekrümmte Anordnung von Wellenleitern und eine Ausgangsanordnung von radialen Wellenleitern einschließt; und

Ausgangskopplermittel zum Kombinieren der Komponenten, die in den Armen in ein Ausgangssignal propagierten,

wobei die erste und zweite gekrümmte Anordnung entgegengesetzte Krümmungen besitzen,

wobei jeder Wellenleiter der ersten gekrümmten Anordnung durch einen Krümmungsradius $R$ gekennzeichnet ist, der sich als Funktion eines Drehwinkels $\theta$ des Wellenleiters ändert, und die Änderung von $R$ durch Auswählen von Parametern der ersten gekrümmten Anordnung minimiert wird, sodass eine Ableitung der Änderung von $R$ grundsätzlich Null ist für einen bestimmten prinzipiellen Drehwinkel $\theta = \theta_0$ innerhalb einer Öffnung der ersten gekrümmten Anordnung, sodass ein Radius eines prinzipiellen Wellenleiters, korrespondierend mit dem prinzipiellen Drehwinkel $\theta_0$, in der ersten gekrümmten Anordnung ein kleinster Krümmungsradius ist, und wobei jeder Wellenleiter der zweiten gekrümmten Anordnung durch einen Krümmungsradius $R'$ gekennzeichnet ist, der sich als Funktion eines Drehwinkels $\theta$ des Wellenleiters ändert, und die Änderung von $R'$ durch Auswählen von Parametern der zweiten gekrümmten Anordnung minimiert wird, sodass eine Ableitung der Änderung von $R'$ grundsätzlich Null ist für einen bestimmten prinzipiellen Drehwinkel $\theta = \theta_0$ innerhalb einer Öffnung der zweiten gekrümmten Anordnung, sodass ein Radius eines prinzipiellen Wellenleiters, korrespondierend mit dem prinzipiellen Drehwinkel $\theta_0$, in der zweiten gekrümmten Anordnung ein kleinster Krümmungsradius ist.

2. Vorrichtung gemäß Anspruch 1, wobei die prinzipiellen Drehwinkel $\theta_0$ und $\theta_0$ so ausgewählt werden, dass Nicht-Null-Beugungsordnungen produziert werden.

3. Vorrichtung gemäß Anspruch 1, wobei jeder der Arme des Gitter-Mittels Sektionen einschließt, die verschiedene effektive Brechungsindizes besitzen.

4. Vorrichtung gemäß Anspruch 1, wobei sukzessive Arme des Gitter-Mittels eine Weglängendifferenz $\Delta L$ besitzen, die einen im Wesentlichen konstanten Wert von jedem Arm zu einem korrespondierenden nächsten Arm besitzt.

5. Vorrichtung gemäß Anspruch 1, wobei die Wellenleiter der zentralen Anordnung einen im Wesentlichen konstanten Wellenleiterabstand besitzen.

6. Vorrichtung gemäß Anspruch 1, wobei die radialen Wellenleiter in den Eingangs- und Ausgangsanordnungen eine konstante radiale Trennung zwischen Wellenleitern besitzen.

7. Vorrichtung gemäß Anspruch 1, wobei die kleinsten Krümmungsradien der ersten und zweiten prinzipiellen Wellenleiter im Wesentlichen kleiner als Radien sind, die an Kanten einer Öffnung des Gitters produziert werden.

8. Vorrichtung gemäß Anspruch 1, wobei die Vorrichtung einen Router beinhaltet.

9. Vorrichtung gemäß Anspruch 1, wobei eine Winkelperiode der Eingangsanordnung von radialen Wellenleitern größer als eine Winkelperiode der Ausgangsanordnung von radialen Wellenleitern ist.

10. Vorrichtung nach Anspruch 1, wobei:

die kleinsten Krümmungsradien der ersten und zweiten prinzipiellen Wellenleiter im Wesentlichen kleiner als Radien sind, die an Kanten einer Öffnung des Gitter-Mittels produziert werden;
die prinzipiellen Drehwinkel $\theta_0$ und $\theta_0$ der ersten bzw. zweiten prinzipiellen Wellenleiter eine Bedingung $\theta_0 \geq \theta_0$ erfüllen und eine Weglängendifferenz $\Delta L$ größer ist als ein Wert eines Ausdrucks:

$$\tan(\theta_0/2) \cdot (s_{max} + s_{mjn}) - \tan(\theta'_0/2) \cdot 2s_{max}$$

und $\Delta L$ kleiner ist als ein Wert von:

$$\tan(\theta_0/2) \cdot 2s_{max} - \tan(\theta'_0/2) \cdot (s_{max} + s_{mjn})$$

wobei $s_{max}$ und $s_{min}$ jeweils eine größte und kleinste Wellenleiter-Trennung in einer zentralen Gitter-Region sind, die die ersten und zweiten gekrümmten Anordnungen und die zentrale Anordnung einschließt.

11. Ein Verfahren, das Folgendes beinhaltet:

Empfangen eines optischen Eingangssignals an einem Eingangskoppler;
Propagieren von Komponenten des empfangenen Eingangssignals in jeweiligen einer Vielzahl von Armen eines Gitters, wobei das Gitter eine Eingangsanordnung von radialen Wellenleitern, eine erste gekrümmte Anordnung von Wellenleitern, eine zentrale Anordnung von grundsätzlich geraden Wellenleitern, eine zweite gekrümmte Anordnung von Wellenleitern und eine Ausgangsanordnung von radialen Wellenleitern einschließt,

wobei die erste und zweite gekrümmte Anordnung entgegengesetzte Krümmungen besitzen,

wobei jeder Wellenleiter der ersten gekrümmten Anordnung durch einen Krümmungsradius $R$ gekennzeichnet ist, der sich als Funktion eines Drehwinkels $\theta$ des Wellenleiters ändert, und die Änderung von $R$ durch Auswählen von Parametern der ersten gekrümmten Anordnung minimiert wird, sodass eine Ableitung der Änderung von $R$ grundsätzlich Null ist für einen bestimmten prinzipiellen Drehwinkel $\theta = \theta_0$ innerhalb einer Öffnung der ersten gekrümmten Anordnung, sodass ein Radius eines prinzipiellen Wellenleiters, korrespondierend mit dem prinzipiellen Drehwinkel $\theta_0$, in der ersten gekrümmten Anordnung ein kleinster Krümmungsradius ist, und

wobei jeder Wellenleiter der zweiten gekrümmten Anordnung durch einen Krümmungsradius $R'$ gekennzeichnet ist, der sich als Funktion eines Drehwinkels $\theta$ des Wellenleiters ändert, und die Änderung von $R'$ durch Auswählen von Parametern der zweiten gekrümmten Anordnung minimiert wird, sodass eine Ableitung der Änderung von $R'$ grundsätzlich Null ist für einen bestimmten prinzipiellen Drehwinkel $\theta = \theta$ innerhalb einer Öffnung der zweiten gekrümmten Anordnung, sodass ein Radius eines prinzipiellen Wellenleiters, korrespondierend mit dem prinzipiellen Drehwinkel $\theta_0$, in der zweiten gekrümmten Anordnung ein kleinster Krümmungsradius ist; und

Kombinieren der Komponenten, die in den Armen in ein Ausgangssignal an einem Ausgangskoppler propagierten.

## Revendications

1. Un appareil, comprenant :

   un moyen de couplage en entrée destiné à la réception d'un signal en entrée,

   un moyen de réseau destiné à la propagation de composants du signal en entrée reçu dans des bras respectifs d'une pluralité de bras, le moyen de réseau comprenant une matrice d'entrée de guides d'ondes radiaux, une première matrice incurvée de guides d'ondes, une matrice centrale de guides d'ondes essentiellement linéaires, une deuxième matrice incurvée de guides d'ondes et une matrice de sortie de guides d'ondes radiaux, et

   un moyen de couplage en sortie destiné à la combinaison des composants qui se sont propagés dans les bras en un signal de sortie,

   où les première et deuxième matrices incurvées possèdent des courbures opposées,

   où chaque guide d'ondes de la première matrice incurvée est **caractérisé par** un rayon de courbure $R$ qui varie en fonction d'un angle de rotation $\theta$ du guide d'ondes et la variation de R est minimisée par le choix de paramètres de la première matrice incurvée de sorte qu'une dérivée de ladite variation de $R$ soit essentiellement nulle pour un angle de rotation principal particulier $\theta = \theta_0$ à l'intérieur d'une ouverture de la première matrice incurvée, de sorte qu'un rayon d'un guide d'ondes principal correspondant audit angle de rotation principal $\theta_0$ soit un rayon de courbure le plus petit dans ladite première matrice incurvée, et

   où chaque guide d'ondes de la deuxième matrice incurvée est **caractérisé par** un rayon de courbure $R'$ qui varie en fonction d'un angle de rotation $\theta$ du guide d'ondes et la variation de $R'$ est minimisée par le choix de paramètres de la deuxième matrice incurvée de sorte qu'une dérivée de ladite variation de $R'$ soit essentiellement nulle pour un angle de rotation principal particulier $\theta = \theta_0$ à l'intérieur d'une ouverture de la deuxième matrice incurvée, de sorte qu'un rayon d'un guide d'ondes principal correspondant audit angle de rotation principal $\theta_0$ soit un rayon de courbure le plus petit dans ladite deuxième matrice incurvée.

2. L'appareil selon la Revendication 1 où lesdits angles de rotation principaux $\theta_0$ et $\theta_0$ sont choisis de façon à produire des ordres de diffraction non nuls.

3. L'appareil selon la Revendication 1 où chacun des bras du moyen de réseau comprend des sections possédant des indices de réfraction effectifs différents.

4. L'appareil selon la Revendication 1 où des bras successifs du moyen de réseau possèdent une différence de longueur de trajet $\Delta L$ qui présente une valeur sensiblement constante de chaque bras à un bras suivant correspondant.

5. L'appareil selon la Revendication 1 où les guides d'ondes de la matrice centrale possèdent un espacement de guide d'ondes sensiblement constant.

6. L'appareil selon la Revendication 1 où les guides d'ondes radiaux dans les matrices d'entrée et de sortie possèdent une séparation radiale constante entre guides d'ondes.

**7.** L'appareil selon la Revendication 1 où lesdits rayons de courbure les plus petits des premier et deuxième guides d'ondes principaux sont sensiblement plus petits que les rayons produits au niveau de bords d'une ouverture du réseau.

**8.** L'appareil selon la Revendication 1 où l'appareil comprend un routeur.

**9.** L'appareil selon la Revendication 1 où une période angulaire de la matrice d'entrée de guides d'ondes radiaux est supérieure à une période angulaire de la matrice de sortie de guides d'ondes radiaux.

**10.** L'appareil selon la Revendication 1, où :

lesdits rayons de courbure les plus petits des premier et deuxième guides d'ondes principaux sont sensiblement plus petits que les rayons produits au niveau de bords d'une ouverture du moyen de réseau,
lesdits angles de rotation principaux $\theta_0$ et $\theta_0$ des premier et deuxième guides d'ondes principaux satisfont, respectivement, la condition $\theta_0 \geq \theta_0$ et
une différence de longueur de trajet $\Delta L$ est supérieure à une valeur d'une expression :

$$\tan(\theta_0 \ / \ 2) \bullet (s_{max} + s_{min}) - \tan(\theta'_0 \ / \ 2) \bullet 2s_{max}$$

et $\Delta L$ est plus petit qu'une valeur de :

$$\tan(\theta_0 \ /2) \bullet 2s_{max} - \tan(\theta'_0 \ /2) \bullet (s_{max} + s_{min})$$

où $s_{max}$ et $s_{min}$ sont respectivement une séparation de guide d'ondes la plus grande et la plus petite dans une zone de réseau centrale qui comprend les première et deuxième matrices incurvées et la matrice centrale.

**11.** Un procédé, comprenant :

la réception d'un signal optique en entrée au niveau d'un coupleur d'entrée,
la propagation de composants du signal en entrée reçu dans des bras respectifs d'une pluralité de bras d'un réseau, le réseau comprenant une matrice d'entrée de guides d'ondes radiaux, une première matrice incurvée de guides d'ondes, une matrice centrale de guides d'ondes essentiellement linéaires, une deuxième matrice incurvée de guides d'ondes et une matrice de sortie de guides d'ondes radiaux,
où les première et deuxième matrices incurvées possèdent des courbures opposées,
où chaque guide d'ondes de la première matrice incurvée est **caractérisé par** un rayon de courbure $R$ qui varie en fonction d'un angle de rotation $\theta$ du guide d'ondes et la variation de $R$ est minimisée par le choix de paramètres de la première matrice incurvée de sorte qu'une dérivée de ladite variation de $R$ soit essentiellement nulle pour un angle de rotation principal particulier $\theta = \theta_0$ à l'intérieur d'une ouverture de la première matrice incurvée, de sorte qu'un rayon d'un guide d'ondes principal correspondant audit angle de rotation principal $\theta_0$ soit un rayon de courbure le plus petit dans ladite première matrice incurvée, et
où chaque guide d'ondes de la deuxième matrice incurvée est **caractérisé par** un rayon de courbure $R'$ qui varie en fonction d'un angle de rotation $\theta$ du guide d'ondes et la variation de $R'$ est minimisée par le choix de paramètres de la deuxième matrice incurvée de sorte qu'une dérivée de ladite variation de $R'$ soit essentiellement nulle pour un angle de rotation principal particulier $\theta = \theta_0$ à l'intérieur d'une ouverture de la deuxième matrice incurvée, de sorte qu'un rayon d'un guide d'ondes principal correspondant audit angle de rotation principal $\theta_0$ soit un rayon de courbure le plus petit dans ladite deuxième matrice incurvée, et
la combinaison des composants qui se sont propagés dans les bras en un signal de sortie au niveau d'un coupleur de sortie.

FIGURE 1
(PRIOR ART)

FIGURE 2
(PRIOR ART)

EP 2 250 523 B1

FIGURE 3

FIGURE 4

FIGURE 5

FIGURE 6

6 cm

0.65 cm

FIGURE 7

FIGURE 8

EP 2 250 523 B1

Fiber Bandwidth $\quad B = (1+\gamma)C$

$C$ $\qquad$ $\gamma C = N\Delta B$

923 $\qquad$ 925 $\qquad$ 924

$E_{out} \simeq 1$ $\qquad$ $E_{out} \simeq 1$

$\lambda$

$\lambda_1$ $\qquad$ $\lambda_2$ $\quad$ $\lambda_3$ $\qquad$ $\lambda_4$

$\lambda_a$ $\qquad$ 918 $\qquad$ $\lambda_b$ $\quad$ 919 $\qquad$ $\lambda_c$

$C = \lambda_b - \lambda_a$ $\qquad$ 916 $\qquad$ 917 $\qquad$ $C = \lambda_c - \lambda_b$

Two Cycles

904 $\qquad$ 946 $\qquad$ $I''$

$\dfrac{\Delta\theta_0'}{2}$ $\qquad$ $P_1$

$\Delta\theta_0'$ $\qquad$ $F'$

$\qquad$ $I$ $\qquad$ $\gamma\Omega$ $\quad$ $\Omega$

945 $\qquad$ 947 $\qquad$ $P_2$

914 $\qquad$ 932 $\quad$ 931

Efficient Transition $\qquad$ 902

FIGURE 9

28

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 15146908 A
- US 61067395 A
- US 5136671 A
- US 5212758 A
- WO 2004083922 A1
- EP 0921423 A1
- US 6873766 B2
- US 7068888 B1
- US 5412744 A